# EUROPEAN PATENT SPECIFICATION

(11) **EP 0 598 425 B1**
(45) Date of publication and mention of the grant of the patent: **30.12.1998**
(21) Application number: 93202935.8
(22) Date of filing: 20.10.1993
(51) Int. Cl.: B62D 7/06, B62D 9/00

(54) **Oscillation stops for tractors with compound steering mechanism**
Schwingungsbegrenzer für Traktoren mit Mischlenkungsmechanismus
Limiteur de débattement pour tracteur à direction mixte

(30) Priority: 12.11.1992 US 974450; 24.12.1992 US 996466
(43) Date of publication of application: 25.05.1994
(73) Proprietor: NEW HOLLAND U.K. LIMITED, Basildon, Essex SS14 3AD (GB)
(72) Inventor: Hurlburt, Joseph C., Lancaster, PA 17603 (US)
(74) Representative: Vandenbroucke, Alberic

(56) References cited:
- EP-A- 0 581 380
- WO-A-89/07545
- US-A- 3 370 670
- US-A- 5 046 577
- US-A- 5 219 180

## Description

This invention relates generally to a steering mechanism for an agricultural tractor in which the front axle is laterally shiftable in response to a steering movement of the steerable wheels and, more particularly, to an oscillation stop mechanism that is cooperable with the laterally shiftable axle to limit the amount of oscillatory pitching movement throughout the entire range of lateral shifting movement of the axle.

Tractors, whether used in an agricultural setting or in an industrial setting, typically include a fixed axle through which primary driving power is transferred through fixed wheels rotatably mounted on opposing ends of the fixed axle, and a steering axle having pivotally mounted steerable ground engaging wheels rotatably mounted on the opposing ends thereof to support the chassis of the tractor above the ground. Supplemental driving power is often provided through the steerable ground engaging wheels, while a steering mechanism remotely controllable by the operator from the operator's compartment selectively controls the pivotal movement of the steerable wheels relative to the steering axle.

One such steering mechanism incorporates a transversely disposed, horizontally extending hydraulic cylinder supported by the steering axle and connected to the opposing steerable wheels. This hydraulic cylinder affects pivotal movement of the steerable wheels about their respective pivotal connections to the steering axle by manipulating the pressures in the hydraulic cylinder to effect a transverse displacement of the cylinder rod, causing a turning of the wheels.

Due to physical limitations relating to the range of movement of the steering mechanism and to the eventual interference between the steerable wheels and the steering axle or chassis frame, the amount of pivotal movement of the steerable wheels relative to the steering axle is limited by tire size and track setting to a given restricted turning angle. This maximum turning angle defines the minimum turning radius of the tractor for a given chassis clearance width, axle oscillation angle, wheel base length and king pin spacing. The selection of the length of the wheel base, i.e., the distance between the fixed axle and the steering axle, is a compromise between the need to minimize the turning radius and, therefore, minimize the wheel base length, and to maximize ride considerations which require longer wheel base lengths.

These conflicting wheel base requirements can be resolved by a steering mechanism incorporating a laterally shifting front axle that is movable in response to a corresponding steering movement of the steerable wheels, which will decrease the turning radius of the tractor for any given wheel base length. The mechanism mounting the steerable axle to the vehicle chassis must accommodate the relative lateral movement between the steering axle and the chassis and preferably maintains the transversely extending axle in a parallel orientation as the axle and chassis move relative to one another in a generally horizontal plane.

However, complicating the development of such a steerable axle to improve turning characteristics of vehicles such as agricultural tractors is the requirement of accommodating the oscillatory pitching movement associated with such vehicle axles. The limits imposed on the structural components to stop the pitching motion of the axle relative to the chassis must be effective throughout the entire range of lateral shifting movement provided to the steerable axle.

To this end, it is already proposed in EP-A-0.581.380 published on 02.02.94 (state of the art according to Article 54(3)EPC) to provide an arcuate track on the axle which cooperates with a set of rollers on the chassis to limit the oscillatory pitching movement of the axle relative to the chassis. From EP-A-0.581.380, it is not clear however how these rollers are positioned relative to the pivot axis around which the axle may laterally shift.

Also, in some instances where the tractor tires are closely spaced and less than a full turn is being attempted, there is very little clearance between the tire and the chassis sheet metal; however, when tight turns are being made the tire is sufficiently displaced from the chassis sheet metal that adequate clearance exists to allow a normal oscillation range.

It is therefore the objective of the present invention to overcome the disadvantages of the prior art arrangements by providing an oscillation stop which is effective throughout the entire range of laterally shifting movement provided to the axle and which selectively provides a mechanism to vary the permissible oscillatory movement of the axle as a function of the degree of turn being attempted.

According to the present invention, a vehicle is provided having :
- a chassis;
- a transverse axle pivotally supported from said chassis for both an oscillatory pitching movement relative thereto about a generally longitudinally extending axis and a lateral movement about a generally vertical pivot axis; said transverse axle having a pair of steerable wheels pivotally connected to the opposing transverse ends of said axle;
- a steering mechanism operably connected to said steerable wheels to control the pivotal movement thereof relative to said axle for controlling the direction of travel of said vehicle; said steering mechanism including means for effecting relative pivotal movement between said axle and said chassis in response to the pivotal movement of said steerable wheels; and
- an oscillation stop mechanism operatively disposed between said transverse axle and said chassis to limit the amount of oscillatory pitching motionof said axle throughout the entire range of lateral movement of said axle; said oscillation stop mechanism comprising an arcuate track and a pair of rollers, said rollers being rotatable about respective axes of rotation which are essentially aligned with said vertical pivot axis.

Said pair of rollers are transversely spaced and engageable with the track throughout the entire range of lateral movement of the steerable axle and limiting the amount of oscillatory pitching movement allowed to the axle irrespective of the laterally shifted position of the axle relative to the chassis.

The arcuate track has a center of curvature that generally coincides with the pivot joint for the lateral shifting movement of the steerable axle. The rollers are positioned on opposing sides of the longitudinally extending axis about which the steerable axis oscillates and are rotatable about axes of rotation that are essentially aligned with the pivot joint about which the steerable axle pivots for lateral shifting movement. After the permissible amount of pitching movement has been encountered, the chassis will move vertically in concert with the axle. As such, the invention provides a steerable axle capable of lateral shifting movement and of controlled oscillatory pitching movement, either independently or simultaneously.

In a preferred embodiment, the oscillation stop is operable to vary the angle of pitching movement permitted to the front axle as a function of the amount of lateral shifting undertaken by the front axle relative to the chassis. To this end, the arcuate track forming a part of the front axle oscillation stop mechanism is constructed with an undulating surface to vary the permissible angular displacement of the axle, whereby the amount of permissible vertical pitching movement can be selected as a function of the turning angle of the steering mechanism.

An oscillation stop in accordance with the present invention will now be described in greater detail, by way of example, with reference to the accompanying drawings, in which :
Figure 1 is a top plan view of a front axle assembly for an agricultural tractor incorporating the principles of the instant invention, the front portion of the tractor chassis overlying the front axle assembly being shown in phantom;
Figure 2 is a cross-sectional view of the front axle assembly taken along lines 2-2 of Figure 1, the front portion of the tractor chassis being shown in phantom relative to the front axle assembly;
Figure 3 is a cross-sectional view of the tractor front axle assembly taken along lines 3-3 of Figure 1 to depict generally a front elevational view of the tractor assembly immediately rearwardly of the weights;
Figure 4 is a schematic front elevational view of the steerable axle and associated support linkage undergoing a straight oscillatory pitching motion;
Figure 5 is a schematic front elevational view similar to that of Figure 4, except that the steerable axle is making a right turn simultaneously with the oscillatory pitching motion induced by travelling over an obstacle;
Figure 6 is a cross-sectional view taken along lines 6 - 6 of Figure 1 to depict a rear elevational view of the steerable axle and associated linkage taken immediately behind the vertical pivot axis for the lateral movement of the axle, the chassis being shown in phantom and the axle being shifted with the pivoting of the wheels to negotiate a right turn;
Figure 7 is a cross-sectional view taken along the same lines as Figure 6 except that the steerable axle is not turning and is undergoing an oscillatory pitching motion due to travelling over an obstacle;
Figure 8 is a schematic front elevation view of an alternative embodiment of the oscillation stop mechanism, the pitching movement of the arcuate track forming a part of the front axle being shown in phantom;
Figure 9 is a schematic front elevational view of the oscillation stop mechanism shown in Figure 8, but showing the relative position of the arcuate track with respect to the rollers when the steering mechanism is attempting a full turn; and
Figure 10 is a partial top plan view of the arcuate track forming a part of the oscillation stop mechanism taken along lines 10-10 of Figure 8.

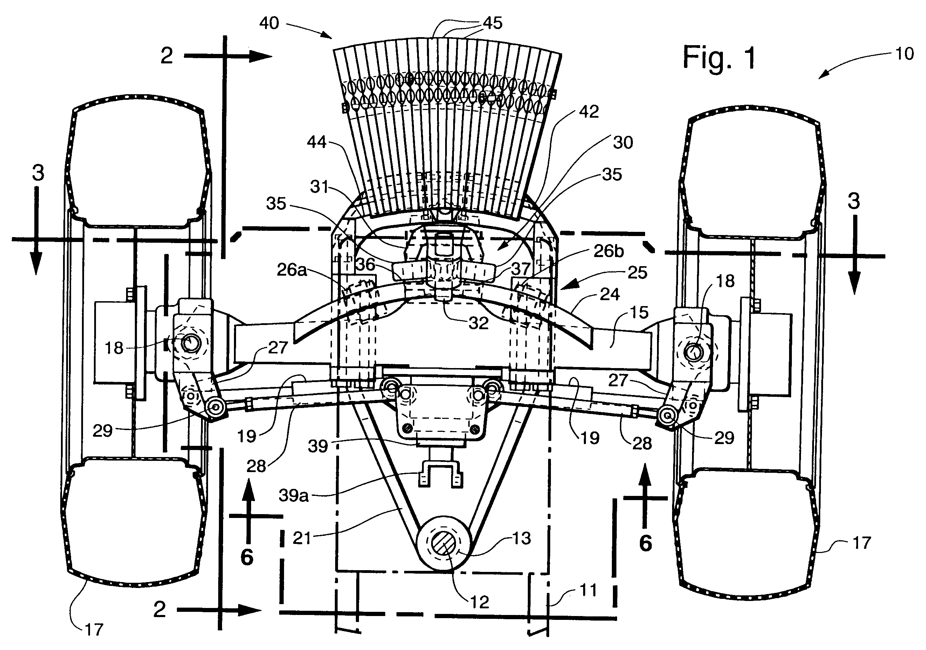

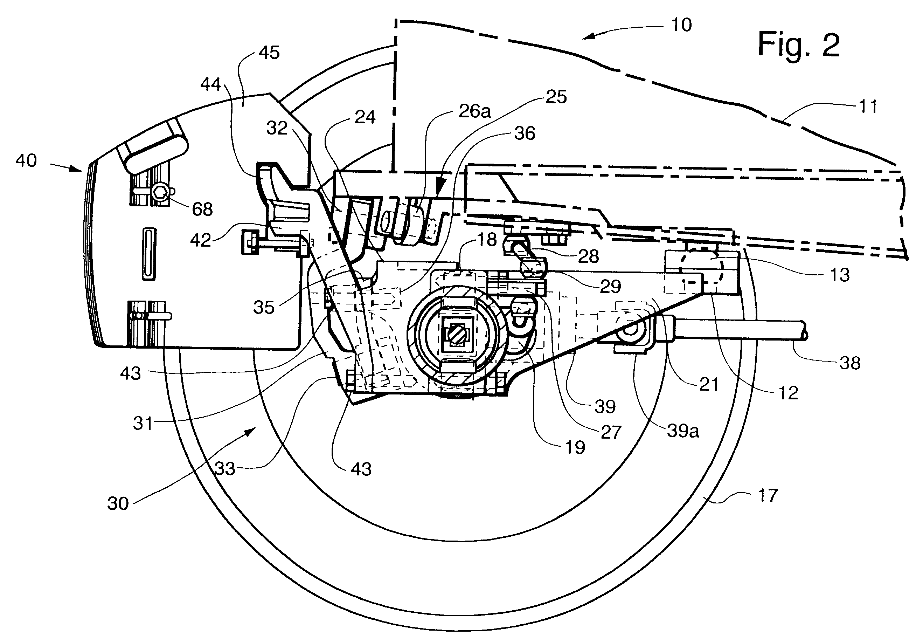

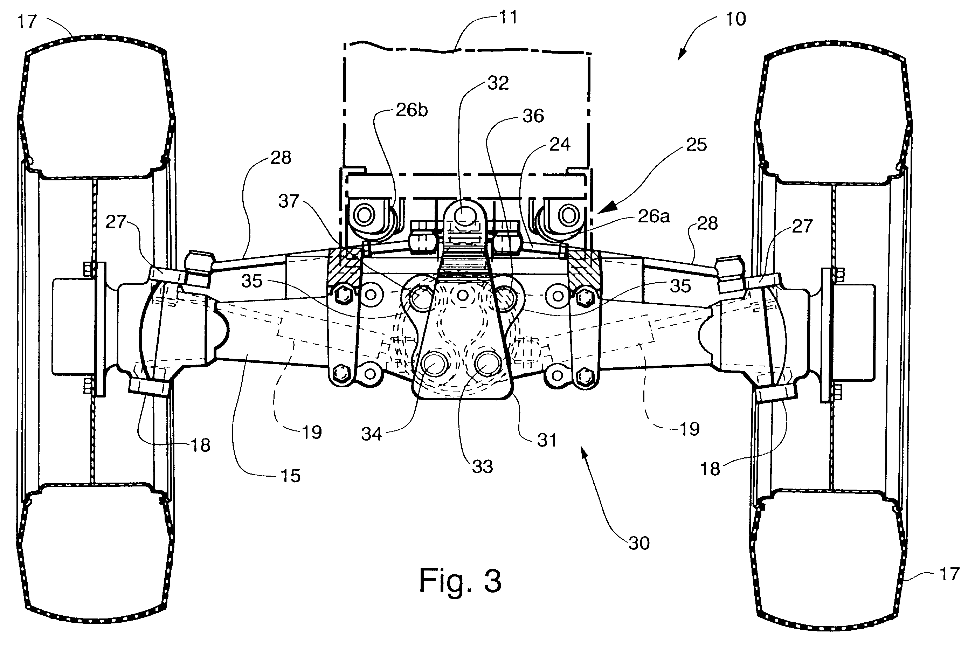

Referring now to Figures 1-3, a laterally shifting front axle assembly for an agricultural tractor or other vehicle, pivotally connected to the vehicle chassis to provide a decreased turning radius for an given wheel base, can best be seen. The front axle assembly 10 is pivotally connected to the tractor chassis 11 for pivotal movement about a generally vertical axis 12, thereby allowing the front axle assembly 10 to rotate about the pivot axis 12 and shift the front axle assembly 10 laterally relative to tractor chassis 11. The pivot axis 12 includes a spherical ball joint 13 to permit some oscillatory movement of the front axle 15 relative to the chassis 11. The details of a laterally shiftable front axle assembly to provide better turning capabilities is described in detail in US-A-5.046.577.

The front axle assembly 10 includes a transversely extending axle member 15 having pivotally mounted on the respective laterally opposing ends thereof a pair of steerable wheels 17 pivotable about respective nearly vertical king pin axes 18 to effect a steering of the wheels 17 relative to the axle member 15. A pair of hydraulic cylinders 19 interconnect the axle member 15 and the steerable wheels 17 via a steering arm 27 to control the pivotable movement of the wheels 17 relative to the axle member, and thereby, effect steering.

The front axle member 15 carries a rearwardly extending subframe member 21 which carries the vertical pivot 12 and ball joint 13 connected to the tractor chassis 11 rearwardly of the front axle member 15 yet generally positioned laterally between the front steerable wheels 17. A front yoke assembly 30 suspends the laterally shiftable front axle member 15 from the forward end of the tractor chassis 11 to permit a pivotal movement of the front axle assembly 10 relative to tractor chassis 11 about the vertical axis 12. To facilitate relative movement between the front axle assembly 10 and the tractor chassis 11 when the axle is fully oscillated, the front axle member 15 is also provided with an arcuate track 24 having a center of curvature essentially coincident with the pivot axis 12.

The chassis 11 carries a pair of laterally spaced rollers 26a, 26b that are engageable with the arcuate track 24 when the front axle member 15 oscillates generally about a horizontal axis in response to changing ground contours and undulations to form an oscillation stop 25 when one of the rollers 26a, 26b engage the arcuate track 24 to provide a limit to the vertical movement or oscillatory pitching movement of the front axle member 15 relative to the tractor chassis 11. The rollers 26a, 26b are rotatably supported about respective axes of rotation carried by the chassis 11 and intersect at a point slightly forwardly of the pivot axis 12, which is generally coincidental with the center of curvature of the track 24. As a result, the rollers 26a, 26b follow along the line of the arcuate track 24 throughout the entire range of lateral movement of the axle 15 relative to the chassis 11.

Whenever the axle 15 oscillates vertically relative to the chassis 11, the resultant tilting of the generally vertical line defining the center of curvature of the track 24 intersects with the line of the axis of rotation of the roller 26a, 26b that would be engaging the track 24 to halt the vertical movement of the axle 15 relative to the chassis 11. It has been found that this configuration facilitates the continued steering movement of the axle 15 relative to the chassis whenever the roller 26a or 26b has engaged the track 24. Preferably, the arcuate track 24 is formed as part of the axle 15 and the rollers 26a, 26b are mounted on the chassis 11; however, one skilled in the art will readily realize that this configuration could be reversed.

A pair of tie rods 28 interconnecting the chassis 11 and the steerable wheels 17 transmit coordinated steerable movement of the wheels 17 relative to each other and to the front axle member 15 and to a lateral shifting movement of the chassis 11 relative to the front axle 15. Although the front axle 15 is pivotally connected to the chassis 11, the front axle 15 is engaged with the ground through the wheels 17 and the actual pivotal movement results in a lateral shifting of the chassis 11. Looking at the front axle 15 from the reference frame of the chassis 11, the appearance is that the axle 15 shifts relative thereto and any reference hereinafter describing the pivotal movement of the front axle member 15 relative to the chassis is so described.

Because of the fixed length of the tie rods 28 interconnecting the chassis 11 and the wheels 17 at a connection point 29 spaced inwardly toward the center of the chassis 11 and rearwardly from the respective pivot axis or king pin 18 for the corresponding steerable wheel 17 by a rearwardly and inwardly extending steering arm 27, a pivotable movement of the wheel 17 about the corresponding pivot axis 18 will result in a corresponding shifting of the front axle 15 relative to the center (not shown) of a tractor chassis 11, along which the vertical pivot axis 12 is positioned.

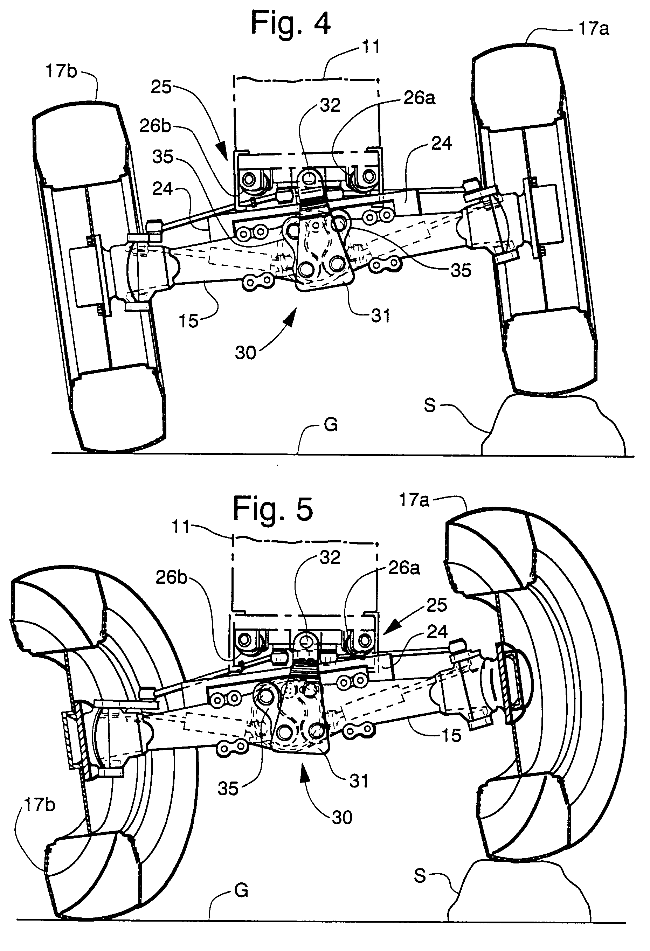

The front yoke assembly 30 has a contoured front carrier member 31 pivotally connected at a second pivot joint 32 to the chassis 11. The front carrier member 31 also carries a pair of transversely spaced third and fourth lower pivots 33, 34, respectively, for pivotally supporting a corresponding pair of dog bone-shaped links 35 which, in turn, are pivotally connected to the front axle member 15 by respective transversely spaced fifth and sixth pivots 36, 37. As depicted in Figure 4, each of the pivots 32, 33, 34, 36 and 37 associated with the front yoke assembly 30 have a corresponding pivot axis aligned with the center of the ball joint 13, which is located on the pivot axis 12. Accordingly, the pivot axis for each of the five pivots 32, 33, 34, 36 and 37 have a nonparallel relationship intersecting a common point at the center of the ball joint 13.

As a result, the pivotal movement of the front axle assembly 10 relative to the tractor chassis 11, resulting in a lateral shifting of the front axle member 15, is accomplished through a four-bar linkage which has very little vertical component associated with the movement thereof, yet the chassis 11 maintains a substantially uniform elevation relative to the front axle 15 throughout the range of relative movement between the front steerable axle and the vehicle chassis. The main pivot axis for vertical oscillatory movement of the front axle 15 is the axis defined by the second pivot joint 32 extending through the ball joint 13, as both the pivot 32 and the ball joint 13 are fixed relative to the chassis 11. The generally transverse lines defined by the tie rods 28 extend through this main pivot axis extending through pivot 32 and ball joint 13 so that movements of the axle 15, especially oscillatory movements, causes a minimum additional steering effect to the axle 15.

As depicted in Figures 1-3, the front axle assembly 10 may be powered in a conventional manner from the transmission (not shown) carried by the tractor chassis 11 through the front wheel drive shaft 38 connected to a conventional front wheel drive mechanism 39 to operatively power the rotation of the steerable wheels 15 to facilitate movement of the tractor chassis 11 over the ground. One skilled in the art will readily realize that the provision of a front wheel drive mechanism 39 is optional and independent of the operation of the compound steering mechanism permitting a lateral shifting of the tractor chassis 11 relative to the front axle member 15. The continuous driving of the front wheels 17 during steering operation involving a lateral shifting of the tractor chassis 11 relative to the front axle member 15 can be accommodated by the universal joint 39a interconnecting the front wheel drive mechanism 39 and the drive shaft 38.

The tractor ballast assembly 40 is carried by the front axle assembly 10 intermediate of the steerable wheels 17 at a position centrally therebetween. A carrier 42 is detachably connected by fasteners 43 to the front axle member 15 to extend forwardly thereof and forwardly of the tractor chassis 11, as well. The carrier 42 is provided with an arcuate mounting ring 44 upon which individual suitcase weights 45 are supported. Since the carrier 42 moves with the front axle member 15 relative to the chassis 11, the position of the ballast assembly 40 relative to the laterally spaced front wheels 17 remains relatively fixed, thereby maintaining a substantially constant weight distribution relative to the front wheels 17. Furthermore, since the ballast assembly 40 moves with the axle member 15, the steering clearance between the pivotally movable wheels 17 and the ballast assembly 40 does not change as the front axle 15 shifts laterally and/or oscillates vertically. As a result, the operator may mount additional weight units 45 to increase the amount of ballast on the front axle 15 without decreasing the tire clearance below that which is acceptable for traditional tractors. Greater detail in the construction and assemblage of the individual weights 45 to form the ballast assembly 40 can be found in US Application US-A-5 219 180 published on 15.06.93.

Referring to Figures 4 - 7, the operation of the oscillation stop 25 to limit the oscillatory pitching motion of the axle 15 relative to the chassis 11 can best be seen. In Figure 4, the left steerable wheel 17a is running over an obstacle S on the ground G. As a result, the left steerable wheel 17a rises relative to the right steerable wheel 17b to cause a pitching motion of the axle 15 relative to the chassis 11. The rollers 26a, 26b, being spaced on opposing sides of the generally horizontal, longitudinal pitching axis extending between the first pivot 13 and the second pivot 32, are positioned such that the left roller 26a will engage the arcuate track 24 to stop the vertical motion of the axle 15. Any further upward movement of the axle 15 beyond what is depicted in Figure 4 will result in a contacting of the roller 26a with the track 24 and then a corresponding movement of the chassis 11 upwardly with the axle 15.

Referring to Figure 5, the orientation of the components of the front yoke assembly 30 can best be seen when the axle 15 is undergoing both a lateral shifting movement and an oscillatory pitching movement. The carrier 31 and link members 35 pivotally move substantially as described above, except that the compounded motion induced by the pitching of the axle 15 results in a lessening of the pivotal movement of the carrier member 31 with respect to the chassis 11 until the track 24 meets the respective roller 26a to limit the pitching motion. One skilled in the art will readily realize that the oscillatory movement of the axle 15 results in a pivotal movement of the carrier 31 with respect to the chassis 11 without causing movement between the carrier 31, link members 35 and axle 15. Using a roller 26 as the oscillation stop allows the axle 15 to move laterally relative to the chassis 11, and thereby continue the steering operation described above, even when the axle 15 is moved through the entire range of permitted oscillation.

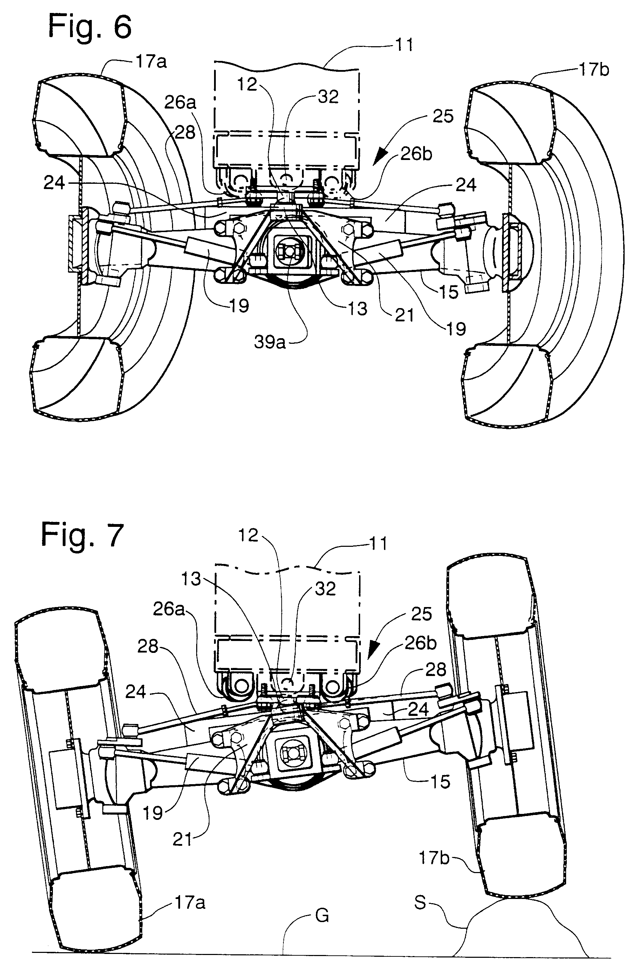

Figures 6 and 7 depict the relative positions of the various components from behind the axle 15 looking forwardly at the axle 15. In Figure 6, the straight lateral shifting movement of the axle 15 relative to the chassis 11 to accomplish a right turn is best seen. Because of the limited vertical movement between the chassis 11 and the axle 15 during such lateral shifting movement, the oscillation stop 25 does not come into operation. In Figure 7, the pitching motion of the axle 15 due to the right steerable wheel 17b passing over an obstacle S on the ground G causes the right roller 26b to be engaged by the arcuate track 24 and limit the pitching motion of the axle 15.

One skilled in the art will readily realize that the arcuate track 24 need not be a continuous member extending from one side of the chassis 11 to the other for engagement with the rollers 26. As an equivalent alternative configuration, the track 24 could be manufactured in segments (not shown), so long as each segment was positioned to be engageable with the corresponding roller 26 throughout the entire range of movement of the chassis-mounted roller 26 relative to the axle 15. The segments (not shown) could be oriented on the axle 15 in a non-contiguous manner. Furthermore, one skilled in the art will readily understand that the rollers 26 could number more than two as described above; however, one roller 26 corresponding to each side of the chassis 11 was found to be most economically desirable and preferred.

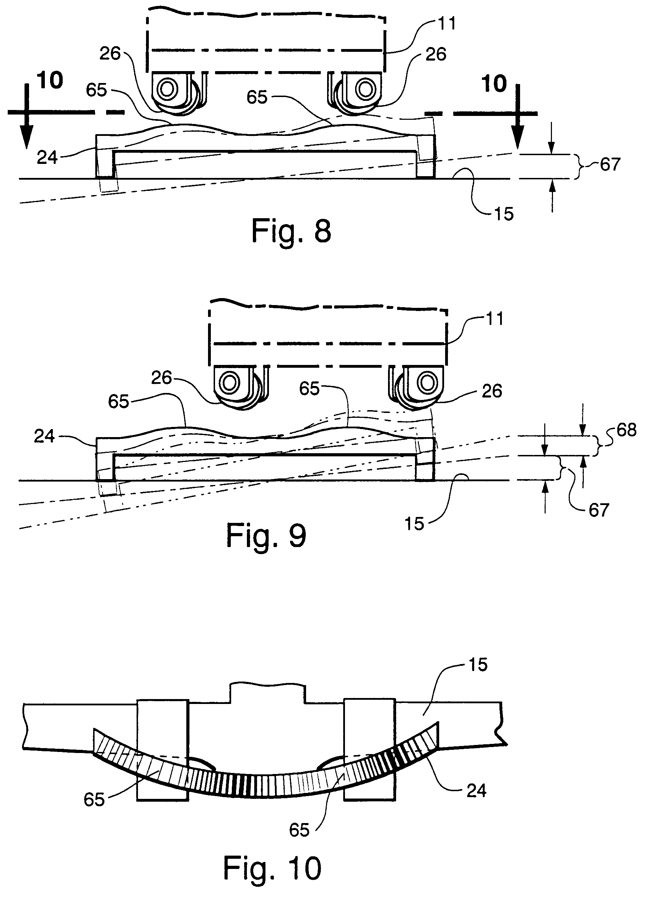

Referring now to Figures 8 - 10, one skilled in the art will readily realize that the oscillation stop 25 described above can be utilized to control the permissible range of oscillation of the axle 15 as a function of the amount of turning movement of the chassis 11 relative to the axle 15. The arcuate track 24 and the corresponding rollers 26 effectively operate as a cam mechanism. By varying the vertical height of the track 24 above the axle 15, the amount of movement of the axle 15 to become engaged with the corresponding one of the rollers 26 can be varied accordingly. In the alternative embodiment of Figures 8 - 10, the track 24 is shown as having a pair of raised portions 65 located in the intermediate portions of the track 24, preferably symmetrically with respect to the longitudinal centerline of the chassis 11.

The raised portions 65 can be integrally formed as part of the track 24, as depicted in the drawings, or, alternatively, detachably fastened as separate members to the top of the track 24. Nevertheless, the respective positions and the relative heights of the raised portions 65 are selected to limit the range of oscillation permitted the axle 15. For example, the raised portions 65 in Figure 8 are positioned to provide a given range of axle oscillation, measured by the vertical deflection 67 of the track 24. When the axle 15 and chassis 11 have undergone relative movement, as described above, the raised portions 65 as shown in Figure 9 are no longer in alignment with the corresponding rollers 26 and the axle 15 is permitted a greater range of oscillation as measured by the additional vertical deflection 68 of the track 24.

This variable oscillation can be particularly advantageous for compound steering devices as described herein. In situations where the chassis 11 is moving straight ahead, not undertaking a turning motion, particularly when the wheels 17 are set close to the chassis to correspond to narrow row crop spacings, the wheels 17 will be relatively close to the chassis 11 and the range of permissible axle oscillation will be limited. Under these same conditions when the chassis is in the process of undertaking a full turning operation, one of the wheels corresponding to the inside of the turn will be canted outwardly due to the conventional physical configuration of the king pin 18, as described above, while the opposing outside wheel 17 will be moved forwardly of the chassis 11. In such hard-turn situations, the clearance between the wheels 17 and the chassis 11 can be increased and a greater amount of axle oscillation can be accommodated, as depicted in Figure 9.

One skilled in the art will readily realize that the shape of the raised portions 65, defined in terms of their respective height and length, can be selected to vary the permissible range of axle oscillation in any desired manner. Since the roller 26 and engaged track 24 will operate as a cam mechanism, the oscillation of the axle 15 can truly be varied as the chassis 11 goes through a turn, thereby providing an oscillation range that varies as a function of the degree of turning being undertaken.

One skilled in the art will also realize that the raised portions 65 need not necessarily be symmetrical with respect to the longitudinal centerline of the chassis 11. Should different oscillation characteristics be desired for respective left and right turns of the steering mechanism, the relative positions of the raised portions 65 can be appropriately selected to provide the desired performance. Still further variations in the oscillation performance of the steering mechanism can be obtained by either shimming the rollers 26 or by changing the diameter of the rollers, which effectively changes the amount of pivotal oscillation of the front axle 15 permitted before the track 24 engages the corresponding roller 26.

It will be understood that changes in the details, materials, steps and arrangements of parts which have been described and illustrated to explain the nature of the invention will occur to and may be made by those skilled in the art upon a reading of this disclosure within the principles and scope of the invention. The foregoing description illustrates the preferred embodiment of the invention; however, concepts, as based upon the description, may be employed in other embodiments without departing from the scope of the invention such as defined by the claim.

## Claims

1. A vehicle having :
- a chassis (11);
- a transverse axle (15) pivotally supported from said chassis (11) for both an oscillatory pitching movement relative thereto about a generally longitudinally extending axis and a lateral movement about a generally vertical pivot axis (12); said transverse axle (15) having a pair of steerable wheels (17) pivotally connected to the opposing transverse ends of said axle (15);
- a steering mechanism operably connected to said steerable wheels (17) to control the pivotal movement thereof relative to said axle (15) for controlling the direction of travel of said vehicle; said steering mechanism including means (28) for effecting relative pivotal movement between said axle (15) and said chassis (11) in response to the pivotal movement of said steerable wheels (17); and
- an oscillation stop mechanism (25) operatively disposed between said transverse axle (15) and said chassis (11) to limit the amount of oscillatory pitching motion of said axle (15) throughout the entire range of lateral movement of said axle (15); said oscillation stop mechanism (25) comprising an arcuate track (24) and a pair of rollers (26a, 26b) said rollers (26a, 26b) being rotatable about respective axes of rotation which are essentially aligned with said vertical pivot axis (12)

2. A vehicle according to claim 1 characterized in that said track (24) is co-extensive with the range of lateral movement available to said transverse axle (15) such that said rollers (26a, 26b) are engageable with said track (24) to limit oscillatory movement of said transverse axle (15) throughout the entire range of relative lateral movement of said axle (15).

3. A vehicle according to claim 1 or 2 characterized in that said pair of rollers (26a, 26b) are transversely spaced and are engageable with said arcuate track (24) after a predetermined amount of oscillatory pitching movement has been undertaken.

4. A vehicle according to any of the preceding claims characterized in that said arcuate track (24) has a center of curvature substantially coincidental with said vertical pivot axis (12).

5. A vehicle according to any of the preceding claims characterized in that said respective axes of rotation of said rollers (26a, 26b) intersect at a point slightly forwardly of said vertical pivot axis (12).

6. A vehicle according to any of the preceding claims characterized in that said track (24) is mounted on said transverse axle (11) and said rollers (26) are mounted on said chassis (11) on opposing sides of said longitudinally extending axis of oscillation.

7. A vehicle according to any of the preceding claims characterized in that the oscillation stop mechanism (25) is variable in a manner such that the range of permissible oscillation of said axle (15) is variable as a function of the degree of turning being effected by said steering mechanism.

8. A vehicle according to claim 7 characterized in that said arcuate track (24) has at least one raised portion (65) extending vertically above said axle (15) a greater distance than the remainder of said track (24) and being engageable with at least one of said rollers (26).

9. A vehicle according to claim 8 characterized in that said arcuate track (24) is provided with a pair of symmetrically positioned raised portions (65) engageable, respectively, with said pair of rollers (26).

10. A vehicle according to claim 9 characterized in that said raised portions (65) are located on intermediate portions of said arcuate track (24) such that the range of permissible axle oscillation will increase as said steering mechanism is manipulated to increase the degree of turning movement to be effected.

11. A vehicle according to claims 8 and 9 characterized in that said raised portions (65) are contoured independently to provide differing ranges of permissible axle oscillation for selective turning parameters.

## Patentansprüche

1. Fahrzeug mit:
- einem Fahrgestell (11),
- einer sich in Querrichtung erstreckenden Achse (15), die schwenkbar an dem Fahrgestell (119 sowohl für eine Querschwingungsbewegung gegenüber diesem um eine sich allgemein in Längsrichtung erstreckende Achse als auch für eine seitliche Bewegung um eine allgemein vertikale Schwenkachse (12) gehaltert ist, wobei die querverlaufende Achse (15) zwei lenkbare Räder (17) aufweist, die schwenkbar mit den gegenüberliegenden Querenden der Achse (15) verbunden sind,
- einem Lenkungsmechanismus, der betriebsmäßig mit den lenkbaren Rädern (17) verbunden ist, um deren Schwenkbewegung gegenüber der Achse 15 zur Steuerung der Bewegungsrichtung des Fahrzeuges zu steuern, wobei der Lenkungsmechanismus Einrichtungen (28) zum Bewirken einer relativen Schwenkbewegung zwischen der Achse (15) und dem Fahrgestell (11) in Abhängigkeit von der Schwenkbewegung der lenkbaren Räder (17) einschließt, und
- einem Schwingungsbegrenzungsmechanismus (25), der betriebsmäßig zwischen der querverlaufenden Achse (15) und dem Fahrgestell 811) angeordnet ist, um das Ausmaß der Querschwingungsbewegung der Achse (15) über den gesamten Bereich der seitlichen Bewegung der Achse (15) zu begrenzen, wobei der Schwingungsbegrenzungsmechanismus (25) eine bogenförmige Führungsbahn (24) und zwei Rollen (26a, 26b) umfaßt, wobei die Rollen (26a, 26b) um jeweilige Drehachsen drehbar sind, die im wesentlichen mit der vertikalen Schwenkachse (12) ausgerichtet sind.

2. Fahrzeug nach Anspruch 1,
dadurch gekennzeichnet, daß sich die Führungsbahn (24) über den gleichen Bereich wie der Bereich der seitlichen Bewegung erstreckt, der für die sich in Querrichtung erstreckende Achse (15) zur Verfügung steht, derart, daß die Rollen (26a, 216b) mit der Führungsbahn (24) zur Begrenzung der Schwingungsbewegung der querverlaufenden Achse (15) über den gesamten Bereich der relativen seitlichen Bewegung der Achse (15) in Eingriff bringbar sind.

3. Fahrzeug nach Anspruch 1 oder 2,
dadurch gekennzeichnet, daß die Rollen (26a, 26b) mit Querabstand angeordnet sind und mit der bogenförmigen Führungsbahn (24) in Eingriff bringbar sind, nachdem ein vorgegebenes Ausmaß der Querschwingungsbewegung ausgeführt wurde.

4. Fahrzeug nach einem der vorhergehenden Ansprüche,
dadurch gekennzeichnet, daß die bogenförmige Führungsbahn (24) einen Krümmungsradius aufweist, der im wesentlichen mit der vertikalen Schwnkachse (12) zusammenfällt.

5. Fahrzeug nach einem der vorhergehenden Ansprüche,
dadurch gekennzeichnet, daß die jeweiligen Drehachsen der Rollen (26)a, 26b) einander an einem Punkt schneiden, der geringfügig vor der vertikalen Schwenkachse (12) liegt.

6. Fahrzeug nach einem der vorhergehenden Ansprüche,
dadurch gekennzeichnet, daß die Bahn (24) auf der querverlaufenden Achse (11) befestigt ist und daß die Rollen (26) auf dem Fahrgestell (11) auf gegenüberliegenden Seiten der sich in Längsrichtung erstreckenden Schwingungsachse befestigt sind.

7. Fahrzeug nach einem der vorhergehenden Ansprüche,
dadurch gekennzeichnet, daß der Schwingungsbegrenzungsmechanismus in einer derartigen Weise änderbar ist, daß der Bereich der zulässigen Schwingung der Achse (15) als eine Funktion des Ausmaßes der Kurvenfahrt veränderlich ist, die von dem Lenkungsmechanismus bewirkt wird.

8. Fahrzeug nach Anspruch 7,
dadurch gekennzeichnet, daß die bogenförmige Führungsbahn (24) zumindest einen erhöhten Abschnitt (65) aufweist, der sich in Vertikalrichtung oberhalb der Achse (15) auf einen größeren Abstand als der übrige Teil der Führungsbahn (24) erstreckt und mit zumindest einer der Rollen (26) in Eingriff bringbar ist.

9. Fahrzeug nach Anspruch 8,
dadurch gekennzeichnet, daß die bogenförmige Führungsbahn (24) mit zwei symmetrisch angeordneten Abschnitten (65) versehen ist, die jeweils mit dem Paar von Rollen (26) in Eingriff bringbar sind.

10. Fahrzeug nach Anspruch 9,
dadurch gekennzeichnet, daß die erhöhten Abschnitte (65) derart auf Zwischenliegenden Teilen der bogenförmigen Führungsbahn (24) liegen, daß sich der Bereich der zulässigen Achsenschwingung vergrößert, wenn der Lenkungsmechanismus betätigt wird, um das Ausmaß der bewirkten Kurvenbewegung zu vergößern.

11. Fahrzeug nach den Ansprüchen 8 und 9,
dadurch gekennzeichnet, daß die erhöhten Abschnitte (65) unabhängig voneinander mit einem Umriß derart versehen sind, daß sich unterschiedliche Bereiche der zulässigen Achsenschwingung für selektive Kurvenfahrtparameter ergeben.

## Revendications

1. Véhicule possédant:
- un châssis;
- un essieu transversal (15) supporté avec pivotement à partir dudit châssis (11) à la fois pour un mouvement oscillatoire de tangage par rapport à ce dernier autour d'un axe d'extension générale longitudinale, et pour un mouvement latéral autour d'un axe de pivotement généralement vertical (12); ledit essieu transversal (15) possédant une paire de roues directrices (17) reliées avec pivotement aux extrémités opposées dudit essieu (15);
- un mécanisme de direction relié fonctionnellement auxdites roues directrices (17) pour commander leur mouvement de pivotement par rapport audit essieu (15) afin de contrôler la direction de déplacement dudit véhicule; ledit mécanisme de direction comprenant un moyen (28) destiné à réaliser un mouvement relatif de pivotement entre ledit essieu (15) et ledit châssis (11) en réponse au mouvement de pivotement desdites roues directrices (17); et
- un mécanisme d'arrêt d'oscillation (25) disposé fonctionnellement entre ledit essieu transversal (15) et ledit châssis (11) afin de limiter le degré de mouvement oscillatoire de tangage dudit essieu (15) sur l'ensemble de la portée de mouvement latéral dudit essieu (15); ledit mécanisme d'arrêt d'oscillation (25) comprenant une voie de roulement arquée (24) et une paire de galets (26a, 26b), lesdits galets (26a, 26b) pouvant tourner autour d'axes respectifs de rotation qui sont essentiellement alignés avec ledit axe vertical de pivotement (12).

2. Véhicule selon la revendication 1, caractérisé en ce que l'extension de ladite voie de roulement (24) est associée à la portée de mouvement latéral autorisé pour ledit essieu transversal (15), de telle sorte que lesdits galets (26a, 26b) peuvent entrer en contact avec ladite voie de roulement (24) pour limiter le mouvement oscillatoire dudit essieu transversal (15) sur l'ensemble de la portée du mouvement latéral relatif dudit essieu (15).

3. Véhicule selon la revendication 1 ou 2, caractérisé en ce que ladite paire de galets (26a, 26b) transversalement espacés peut entrer en contact avec ladite voie de roulement arquée (24) après qu'un degré prédéterminé de mouvement oscillatoire de tangage a été entrepris.

4. Véhicule selon l'une quelconque des revendications précédentes, caractérisé en ce que ladite voie de roulement arquée (24) possède un centre de courbure coïncidant substantiellement avec ledit axe vertical de pivotement (12).

5. Véhicule selon l'une quelconque des revendications précédentes, caractérisé en ce que lesdits axes respectifs de rotation desdits galets (26a, 26b) se croisent en un point légèrement à l'avant dudit axe vertical de pivotement (12).

6. Véhicule selon l'une quelconque des revendications précédentes, caractérisé en ce que ladite voie de roulement (24) est montée sur ledit essieu transversal (11) et que lesdits galets (26) sont montés sur ledit châssis (11) aux côtés opposés dudit axe d'oscillation d'extension longitudinale.

7. Véhicule selon l'une quelconque des revendications précédentes, caractérisé en ce que le mécanisme d'arrêt d'oscillation (25) est variable d'une manière telle que la portée d'oscillation permise dudit essieu (15) est variable en tant que fonction du degré de braquage en cours dudit mécanisme de direction.

8. Véhicule selon la revendication 7, caractérisé en ce que ladite voie de roulement arquée (24) possède au moins une portion surélevée (65) s'étendant verticalement au-dessus dudit essieu (15) sur une distance plus importante que le reste de ladite voie de roulement (24) et pouvant entrer en contact avec au moins un desdits galets (26).

9. Véhicule selon la revendication 8, caractérisé en ce que ladite voie de roulement arquée (24) est pourvue d'une paire de portions surélevées (65) positionnées symétriquement et pouvant respectivement entrer en contact avec ladite paire de galets (26).

10. Véhicule selon la revendication 9, caractérisé en ce que lesdites portions surélevées (65) sont situées sur des parties intermédiaires de ladite voie de roulement arquée (24) de telle sorte que la portée d'oscillation permise d'essieu augmente lorsque ledit mécanisme de direction est manoeuvré pour augmenter le degré de mouvement de braquage à réaliser.

11. Véhicule selon les revendications 8 et 9, caractérisé en ce que lesdites portions surélevées (65) sont galbées indépendamment pour fournir des portées différentes d'oscillation permise d'essieu afin d'obtenir des paramètres sélectifs de braquage.
